# EUROPÄISCHE PATENTANMELDUNG

(11) **EP 3 842 830 A1**
(43) Veröffentlichungstag der Anmeldung: **30.06.2021**
(21) Anmeldenummer: 20214999.3
(22) Anmeldetag: 17.12.2020
(51) Int. Cl.: G01S 7/481, G01S 17/34, G02B 26/10

(54) **VORRICHTUNG ZUR ZWEIDIMENSIONAL SCANNENDEN STRAHLABLENKUNG EINES LICHTSTRAHLS**

(30) Priorität: 23.12.2019 DE 102019135759
(71) Anmelder: Carl Zeiss AG, 73447 Oberkochen (DE)
(72) Erfinder: Höller, Frank, 73434 Aalen (DE); Winkler, Kerstin, 37083 Göttingen (DE); Koch, Felix, 07743 Jena (DE)
(74) Vertreter: Ostertag & Partner Patentanwälte mbB

(57) **Zusammenfassung**

Die Erfindung betrifft eine Vorrichtung zur zweidimensional scannenden Strahlablenkung eines Lichtstrahls, mit wenigstens einer spektral durchstimmbaren Lichtquelle zum Aussenden eines Lichtstrahls mit zeitlich variierender Wellenlänge, einer ersten optischen Komponente (110, 310) zur Erzeugung einer ersten Strahlablenkung, über welche aus dem Lichtstrahl hervorgegangene Teilstrahlen wellenlängenabhängig jeweils in einer ersten Richtung ablenkbar sind, und einer zweiten optischen Komponente (120, 320) zur Erzeugung einer zweiten Strahlablenkung, über welche die von der ersten optischen Komponente (110, 310) abgelenkten Teilstrahlen vor oder nach dieser Ablenkung jeweils in einer von der ersten Richtung verschiedenen zweiten Richtung abgelenkt werden, wobei die zweite optische Komponente (120, 320) wenigstens ein Prismen-Paar aus im Strahlengang hintereinander drehbar angeordneten Prismen aufweist.

## Beschreibung

### HINTERGRUND DER ERFINDUNG

### Gebiet der Erfindung

Die Erfindung betrifft eine Vorrichtung zur zweidimensional scannenden Strahlablenkung eines Lichtstrahls. Die Vorrichtung kann insbesondere zur scannenden Strahlablenkung bei der Ermittlung von Abständen sowohl bewegter als auch unbewegter Objekte und zur Ermittlung der Topographie bzw. Form eines oder mehrerer räumlich ausgedehnter dreidimensionaler Objekte verwendet werden.

### Stand der Technik

Zur optischen Abstandsmessung von Objekten ist u.a. ein auch als LIDAR bezeichnetes Messprinzip bekannt, bei welchem ein kontinuierlich in seiner Frequenz zeitlich verändertes optisches Signal zu dem betreffenden Objekt hin ausgestrahlt und nach an dem Objekt erfolgter Rückreflexion ausgewertet wird.

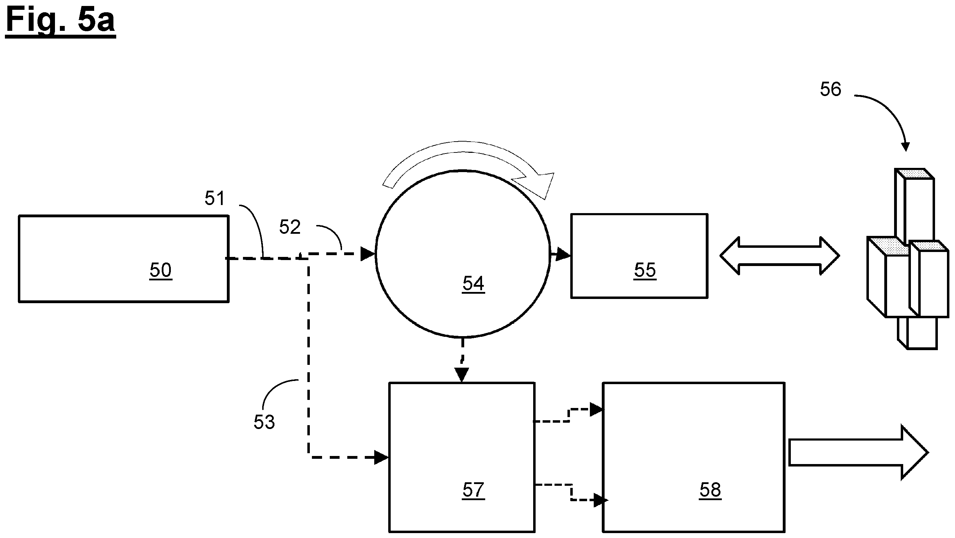

Fig. 5a zeigt lediglich in schematischer Darstellung einen für sich bekannten prinzipiellen Aufbau, in welchem ein von einer spektral durchstimmbaren Lichtquelle 50 ausgesandtes Signal 51 mit zeitlich veränderter Frequenz (auch als "Chirp" bezeichnet) in zwei Teilsignale aufgespalten wird, wobei diese Aufspaltung über einen nicht dargestellten Strahlteiler (z.B. einen teildurchlässigen Spiegel oder einen faseroptischen Splitter) erfolgt. Die beiden Teilsignale werden über einen Signalkoppler 57 gekoppelt und an einem Detektor 58 einander überlagert, wobei das erste Teilsignal als Referenzsignal 53 ohne Reflexion an dem mit "56" bezeichneten Objekt zum Signalkoppler 57 und zum Detektor 58 gelangt. Das zweite am Signalkoppler 57 bzw. am Detektor 58 eintreffende Teilsignal verläuft hingegen als Messsignal 52 über einen optischen Zirkulator 54 und einen Scan-Einrichtung 55 zum Objekt 56, wird von diesem zurückreflektiert und gelangt somit im Vergleich zum Referenzsignal 53 mit einer Zeitverzögerung und entsprechend veränderter Frequenz zum Signalkoppler 57 und zum Detektor 58.

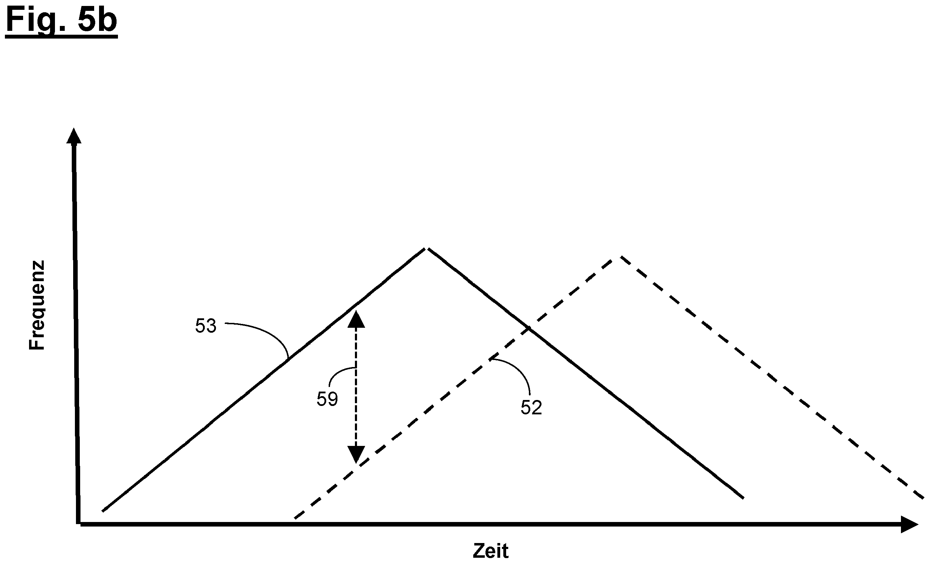

Über eine (nicht dargestellte) Auswerteeinrichtung wird das vom Detektor 58 gelieferte Detektorsignal relativ zur Messvorrichtung bzw. der Lichtquelle 50 ausgewertet, wobei die zu einem bestimmten Zeitpunkt erfasste, im Diagramm von Fig. 5b dargestellte Differenzfrequenz 59 zwischen Messsignal 52 und Referenzsignal 53 charakteristisch für den Abstand des Objekts 56 von der Messvorrichtung bzw. der Lichtquelle 50 ist. Gemäß Fig. 5b kann dabei zum Erhalt zusätzlicher Information hinsichtlich der Relativgeschwindigkeit zwischen dem Objekt 56 und der Messvorrichtung bzw. der Lichtquelle 50 der zeitabhängige Frequenzverlauf des von der Lichtquelle 50 ausgesandten Signals 51 auch so beschaffen sein, dass zwei Abschnitte vorliegen, in denen die zeitliche Ableitung der von der Lichtquelle 50 erzeugten Frequenz zueinander entgegengesetzt ist.

In der Praxis besteht ein Bedarf, auch bei in größeren Abständen befindlichen (ggf. auch bewegten) Objekten, bei welchen es sich z.B. um Fahrzeuge im Straßenverkehr handeln kann, eine möglichst genaue und zuverlässige Abstandsmessung zu realisieren. Dabei ist im Hinblick auf eine möglichst hohe Zuverlässigkeit und Lebensdauer der Vorrichtung zur Abstandsermittlung weiter wünschenswert, beim Abscannen des jeweiligen Objekts den Einsatz von Scan- bzw. Ablenkspiegeln zu vermeiden oder zu minimieren.

Dabei besteht je nach Anwendung der Bedarf nach Realisierung eines möglichst großen Sichtfeldes (FOV = Field of View"), welches ortsaufgelöst von dem jeweiligen Messstrahl "abzurastern" ist. So erfordert beispielsweise der Einsatz im Straßenverkehr eine zweidimensionale Ortsauflösung (senkrecht zur Messstrahlrichtung) von N * M Messpunkten bzw. Pixeln, wobei N und M jeweils vorzugsweise größer als 100 sein sollten.

Die Realisierung eines zweidimensionalen Scanvorgangs mit hinreichend hoher Geschwindigkeit und hoher Auflösung etwa beim Abscannen von Objekten wie Fahrzeugen stellt jedoch in der Praxis eine anspruchsvolle Herausforderung dar. Hierbei erweist es sich beispielsweise beim Einsatz MEMSbasierter Scanspiegel als problematisch, große Spiegeldurchmesser mit einer hinreichend hohen Scangeschwindigkeit zu kombinieren, wobei die erzielbaren Ablenkwinkel auch aufgrund der verwendeten Festkörpergelenke begrenzt sind. Weitere Ansätze auf Basis mechanischer Scanspiegel oder auf Basis einer Kombination von Rotations- und Dispersionsscannern besitzen u.a. den Nachteil eines vergleichsweise komplexen Aufbaus und eines erheblichen Bauraumerfordernisses.

Zum Stand der Technik wird lediglich beispielhaft auf US 2011/0285981 A1 und US 2018/0341003 A1 verwiesen.

### ZUSAMMENFASSUNG DER ERFINDUNG

Vor dem obigen Hintergrund ist es eine Aufgabe der vorliegenden Erfindung, eine Vorrichtung zur zweidimensional scannenden Strahlablenkung eines Lichtstrahls bereitzustellen, welche einen hinreichend schnellen zweidimensionalen Scanvorgang unter Vermeidung der vorstehend beschriebenen Probleme ermöglicht.

Diese Aufgabe wird durch die Merkmale des unabhängigen Patentanspruchs 1 gelöst.

Eine erfindungsgemäße Vorrichtung zur zweidimensional scannenden Strahlablenkung eines Lichtstrahls weist auf:
- wenigstens eine spektral durchstimmbare Lichtquelle zum Aussenden eines Lichtstrahls mit zeitlich variierender Wellenlänge;
- eine erste optische Komponente zur Erzeugung einer ersten Strahlablenkung, über welche aus dem Lichtstrahl hervorgegangene Teilstrahlen wellenlängenabhängig jeweils in einer ersten Richtung ablenkbar sind; und
- eine zweite optische Komponente zur Erzeugung einer zweiten Strahlablenkung, über welche die von der ersten optischen Komponente abgelenkten Teilstrahlen vor oder nach dieser Ablenkung jeweils in einer von der ersten Richtung verschiedenen zweiten Richtung abgelenkt werden;
- wobei die zweite optische Komponente wenigstens ein Prismen-Paar aus im Strahlengang hintereinander drehbar angeordneten Prismen aufweist.

Der Erfindung geht zunächst von der Überlegung aus, dass für die Realisierung einer zweidimensionalen scannenden Strahlablenkung (zwecks zweidimensionaler Abrasterung eines Objekts) eine kontinuierlich bzw. monoton hinsichtlich der wellenlängenabhängigen Strahlablenkung wirkende optische Komponente (wie z.B. ein Gitter oder Gitterprisma) mit einer weiteren Komponente kombiniert werden kann, welche während des Scanvorgangs in einer anderen (typischerweise zur ersten Strahlablenkung senkrechten) Richtung eine (insbesondere periodische) Hin- und Herbewegung des jeweiligen Strahls bewirkt, mit anderen Worten also ein- und denselben Ablenkwinkel-Bereich wiederholt durchläuft. Im Ergebnis kann so ein zweidimensionaler Scanvorgang mit hoher Geschwindigkeit erzielt werden.

Der Erfindung liegt dabei insbesondere das Konzept zugrunde, eine zweidimensional scannende Strahlablenkung dadurch zu realisieren, dass in Kombination mit wenigstens einer in ihrer Wellenlänge spektral durchstimmbaren Lichtquelle wenigstens zwei bezogen auf die Lichtausbreitungsrichtung nacheinander angeordnete bzw. vom Licht nacheinander durchlaufene optische Komponenten eingesetzt werden, wobei die eine dieser Komponenten eine wellenlängenabhängige Strahlablenkung bewirkt und wobei die andere dieser Komponenten wenigstens ein Prismen-Paar aus im Strahlengang hintereinander drehbar angeordneten Prismen aufweist.

Der zur Realisierung eines zweidimensionalen Scanvorgangs erfindungsgemäß - in Kombination mit einer wellenlängenabhängigen, z.B. durch ein Gitter oder Gitterprisma bewirkten ersten Strahlablenkung - erfolgende Einsatz eines Prismen-Paars aus im Strahlengang nacheinander drehbar angeordneten Prismen hat dabei u.a. den Vorteil, dass durch besagtes Prismen-Paar eine periodische Hin- und Herbewegung des jeweiligen Strahls bereits durch eine kontinuierliche gegenläufige Drehbewegung der Prismen herbeigeführt werden kann mit der Folge, dass die Prismen keine Beschleunigung erfahren (also keine optischen Elemente hin- und her bewegt werden müssen) und zugleich ein gleichermaßen robuster wie kompakter Aufbau verwirklicht wird. Dabei resultiert die Kompaktheit der erfindungsgemäßen Vorrichtung aus dem Umstand, dass die lateralen Abmessungen (d.h. die Abmessungen senkrecht zum optischen Strahlengang bzw. zur Lichtausbreitungsrichtung) letztlich nicht signifikant größer als die entsprechenden Strahlabmessungen sein müssen.

Des Weiteren hat der erfindungsgemäß in Kombination mit dem o.g. Prismen-Paar erfolgende Einsatz einer wellenlängenabhängig strahlablenkenden ersten optischen Komponente (z.B. Gitter oder Gitterprisma) den Vorteil, dass im Sinne einer zeitlichen Parallelisierung des Scanvorgangs auch mehrere Lichtstrahlen unterschiedlicher Wellenlänge bzw. unterschiedlichen Durchstimmbereichs (über den Einsatz mehrerer Lichtquellen und/oder eines Frequenzkamms) verarbeitet werden können.

Gemäß einer Ausführungsform weist die erste optische Komponente wenigstens ein Gitter auf. Bei diesem Gitter kann es sich um ein in Transmission betriebenes oder auch um ein in Reflexion betriebenes Gitter handeln.

Gemäß einer Ausführungsform weist die erste optische Komponente wenigstens ein Gitterprisma auf. Aufgrund der Ausgestaltung der (wellenlängenabhängig arbeitenden) ersten optischen Komponente als hochgradig dispersives Gitterprisma kann der für den zweidimensionalen Scanvorgang benötigte Durchstimmbereich der wenigstens einen Lichtquelle vergleichsweise gering (z.B. 1500nm±100nm) gewählt werden.

Gemäß einer Ausführungsform sind die Prismen des Prismen-Paars als achromatische Prismen ausgestaltet. Hierdurch kann eine wellenlängenunabhängige Funktionsweise der zweiten optischen Komponente (deren Strahlablenkung auf der Prismendrehung und nicht auf der Wellenlängendurchstimmung basieren soll) gewährleistet werden.

Gemäß einer Ausführungsform ist die zweite Richtung senkrecht zur ersten Richtung.

Gemäß einer Ausführungsform ist die zweite optische Komponente bezogen auf die Lichtausbreitungsrichtung nach der ersten optische Komponente angeordnet. Dies ist insofern vorteilhaft, als die für die erste Komponente (z.B. das Gitterprisma) vorliegenden Einfallswinkel des Lichts unabhängig vom Verdrehwinkel der Prismen unverändert bleiben und ferner die lateralen Abmessungen der ersten Komponente des Gitterprismas aufgrund der Platzierung am Lichteintritt in der Gesamtanordnung aus erster und zweiter Komponente minimiert werden können. Es ist jedoch darauf hinzuweisen, dass grundsätzlich die zweite optische Komponente bezogen auf den optischen Strahlengang alternativ nach oder auch vor der ersten optischen Komponente angeordnet sein kann.

Gemäß einer Ausführungsform ist die wenigstens eine spektral durchstimmbare Lichtquelle zum parallelen Aussenden einer Mehrzahl von Lichtstrahlen mit jeweils zeitlich variierender Wellenlänge ausgelegt.

Gemäß einer Ausführungsform weist die Vorrichtung ferner wenigstens einen Polarisator auf. Über einen solchen Polarisator kann der Polarisationszustand des wenigstens einen von der Lichtquelle ausgesandten Lichtstrahls derart eingestellt werden, dass die Beugungseffizienz eines die erste Komponente bildenden Gitters bzw. Gitterprismas maximiert wird.

Die Erfindung betrifft weiter auch die Verwendung einer Vorrichtung mit den vorstehend beschriebenen Merkmalen in einem LIDAR-System zur scannenden Abstandsermittlung eines Objekts.

Die Erfindung betrifft weiter ein LIDAR-System zur scannenden Abstandsermittlung eines Objekts, mit
- wenigstens einer spektral durchstimmbaren Lichtquelle zum Aussenden eines Lichtstrahls mit zeitlich variierender Wellenlänge;
- einer Auswerteeinrichtung zur Ermittlung eines Abstandes des Objekts auf Basis von aus dem Lichtstrahl jeweils hervorgegangenen, an dem Objekt reflektierten Messsignalen und nicht an dem Objekt reflektierten Referenzsignalen; und
- einer Scan-Einrichtung, welche eine wellenlängenabhängige Winkelverteilung der zu dem Objekt gelenkten Messsignale bewirkt;
- wobei diese Scan-Einrichtung eine erste optische Komponente zur Erzeugung einer ersten Strahlablenkung, über welche aus dem Lichtstrahl hervorgegangene Teilstrahlen wellenlängenabhängig jeweils in einer ersten Richtung ablenkbar sind, und eine zweite optische Komponente zur Erzeugung einer zweiten Strahlablenkung, über welche die von der ersten optischen Komponente abgelenkten Teilstrahlen vor oder nach dieser Ablenkung wellenlängenabhängig jeweils in einer von der ersten Richtung verschiedenen zweiten Richtung abgelenkt werden, aufweist, wobei die zweite optische Komponente wenigstens ein Prismen-Paar aus im Strahlengang hintereinander drehbar angeordneten Prismen aufweist.

Weitere Ausgestaltungen der Erfindung sind der Beschreibung sowie den Unteransprüchen zu entnehmen.

Die Erfindung wird nachstehend anhand von in den beigefügten Abbildungen dargestellten Ausführungsbeispielen näher erläutert.

### KURZE BESCHREIBUNG DER ZEICHNUNGEN

Es zeigen:
- Figuren 1-4: schematische Darstellungen zur Erläuterung unterschiedlicher Ausführungsformen der Erfindung; und
- Figuren 5a-5b: schematische Darstellungen zur Erläuterung von Aufbau und Wirkungsweise einer Vorrichtung zur Abstandsermittlung.

### DETAILLIERTE BESCHREIBUNG BEVORZUGTER AUSFÜHRUNGSFORMEN

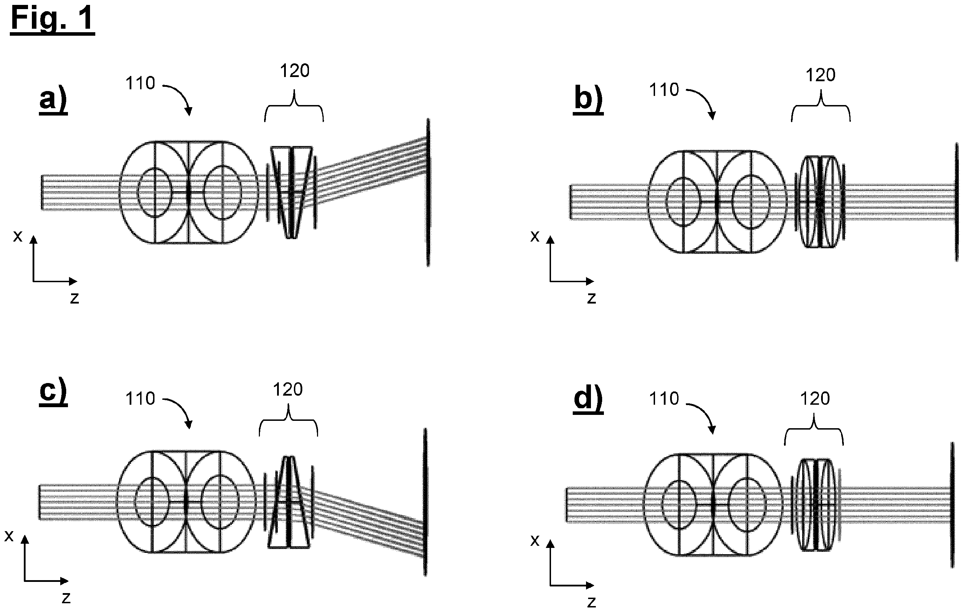

Im Weiteren werden anhand unterschiedlicher Ausführungsformen der prinzipiell mögliche Aufbau sowie die Funktionsweise einer erfindungsgemäßen Vorrichtung zur zweidimensional scannenden Strahlablenkung unter Bezugnahme auf die schematischen Abbildungen von Fig. 1-4 beschrieben.

Die erfindungsgemäße Vorrichtung weist wenigstens eine spektral durchstimmbare (d.h. hinsichtlich der Wellenlänge des ausgesandten Lichts variierbare) Lichtquelle zum Aussenden wenigstens eines Lichtstrahls mit zeitlich variierender Wellenlänge auf. In weiteren Ausführungsformen können auch zwecks zeitlicher Parallelisierung des Scanvorgangs mehrere Lichtstrahlen unterschiedlicher Wellenlänge bzw. unterschiedlichen Durchstimmbereichs bereitgestellt werden, was wiederum über den Einsatz mehrerer Lichtquellen oder alternativ auch unter Erzeugung eines Frequenzkamms erfolgen kann.

Den im Weiteren beschriebenen Ausführungsformen ist gemeinsam, dass - zur zweidimensional scannenden Strahlablenkung wenigstens eines von jeweils einer spektral durchstimmbaren Lichtquelle erzeugten Lichtstrahls mit zeitlich variierender Wellenlänge - wenigstens zwei separate (und jeweils Strahlablenkungen in voneinander verschiedener Richtung bewirkende) optische Komponenten eingesetzt werden. Dabei erfolgt die eine dieser Strahlablenkungen wellenlängenabhängig (z.B. über ein Gitter oder Gitter-Prisma), wobei die andere dieser Strahlablenkungen über ein Prismen-Paar aus im Strahlengang hintereinander drehbar angeordneten Prismen bewirkt wird. Dabei wird in dem zuletzt genannten Prismen-Paar insbesondere über eine kontinuierliche und gegenläufige Drehbewegung der Prismen, welche keine Beschleunigung bzw. Hin- und Herbewegung der Prismen erfordert, eine periodische Variation des Ablenkwinkels in der betreffenden - von der Strahlablenkung der ersten optischen Komponente verschiedenen - Richtung bewirkt, letztlich also eine kontinuierliche Drehbewegung der Prismen in eine periodische Scanbewegung des jeweiligen Messstrahls umgewandelt.

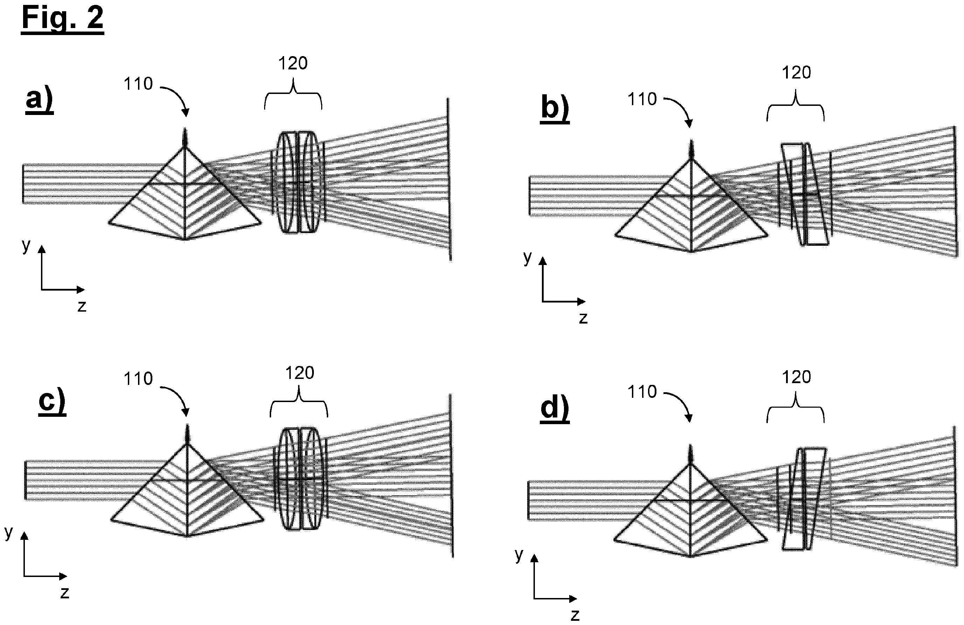

Fig. 1a-1d und Fig. 2a-2d zeigen schematische Darstellungen zur Erläuterung einer ersten Ausführungsform. Dabei trifft Licht einer (in Fig. 1-2 nicht dargestellten) spektral durchstimmbaren Lichtquelle zunächst auf die mit "110" bezeichnete und im Ausführungsbeispiel als (unbewegliches) Gitterprisma ausgestaltete erste Komponente und danach auf die mit "120" bezeichnete, durch das o.g. Prismen-Paar gebildete zweite Komponente.

Die Darstellungen von Fig. 1a-1d zeigen die Anordnung jeweils in Draufsicht (d.h. in der x-z-Ebene im eingezeichneten Koordinatensystem) und für unterschiedliche Drehwinkel der gegenläufig rotierenden Prismen der Komponente 120, wobei die Stellung gemäß Fig. 1a einem zueinander relativen Drehwinkel von 0°, die Stellung gemäß Fig. 1b einem zueinander relativen Drehwinkel von 90°, die Stellung gemäß Fig. 1c einem zueinander relativen Drehwinkel von 180° und die Stellung gemäß Fig. 1d einem zueinander relativen Drehwinkel von 270° entspricht. Dabei handelt es sich bei den gegenläufig rotierenden Prismen der Komponente 120 in der gezeigten Ausführungsform um abgerundete Prismen.

Fig. 2a-2d zeigen analoge Darstellungen für die Seitenansicht (d.h. in der y-z-Ebene im eingezeichneten Koordinatensystem), wobei wiederum die Stellung gemäß Fig. 2a einem Drehwinkel von 0°, die Stellung gemäß Fig. 2b einem Drehwinkel von 90°, die Stellung gemäß Fig. 2c einem Drehwinkel von 180° und die Stellung gemäß Fig. 2d einem Drehwinkel von 270° entspricht.

Die zweidimensionale Strahlablenkung wird im Betrieb der Vorrichtung von Fig. 1-2 dadurch erreicht, dass zum einen die Wellenlänge der Lichtquelle durchgestimmt wird (was zu der in Fig. 2a-2d schematisch angedeuteten Strahlablenkung über die erste Komponente 110 bzw. das Gitterprisma in der y-z-Ebene führt), und zum anderen eine kontinuierliche gegenläufige Drehbewegung der beiden Prismen der zweiten Komponente 120 erfolgt (was zu der in Fig. 1a-1d schematisch angedeuteten Strahlablenkung in der x-z-Ebene führt).

Wesentlich für das Funktionsprinzip ist hierbei, dass hinsichtlich der gemäß Fig. 1a-1d stattfindenden Strahlablenkung in der x-z-Ebene die erste Komponente 110 bzw. das Gitterprisma selbst keine Strahlablenkung bewirkt, so dass die Strahlablenkung insoweit allein auf der zweiten Komponente 120 (d.h. dem Prismen-Paar) beruht.

Umgekehrt erscheint für die gemäß Fig. 2a-2d stattfindende Strahlablenkung in der y-z-Ebene, welche infolge der Wellenlängendurchstimmung durch die erste Komponente 110 bzw. das Gitterprisma bewirkt wird, die zweite Komponente 120 bzw. das Prismen-Paar effektiv im Wesentlichen jederzeit als Planplatte (mit infolge der Drehung zeitlich variierendem Durchmesser) und bewirkt somit ihrerseits in dieser Richtung bzw. in der y-z-Ebene keine Strahlablenkung im Sinne eines Ablenkwinkels (wobei ggf. lediglich ein seitlicher Versatz des Strahlbündels, der im Allgemeinen unkritisch ist, aber auch rechnerisch korrigiert werden kann, bewirkt wird).

Die in der Ausführungsform von Fig. 1-2 gewählte Reihenfolge der optischen Komponenten 110, 120 ist zum einen insofern vorteilhaft, als die für die erste Komponente 110 bzw. das Gitterprisma vorliegenden Einfallswinkel des Lichts unabhängig vom Verdrehwinkel der Prismen unverändert bleiben und zum anderen auch die lateralen Abmessungen des Gitterprismas aufgrund der Platzierung am Lichteintritt in der Gesamtanordnung aus erster und zweiter Komponente minimiert werden können.

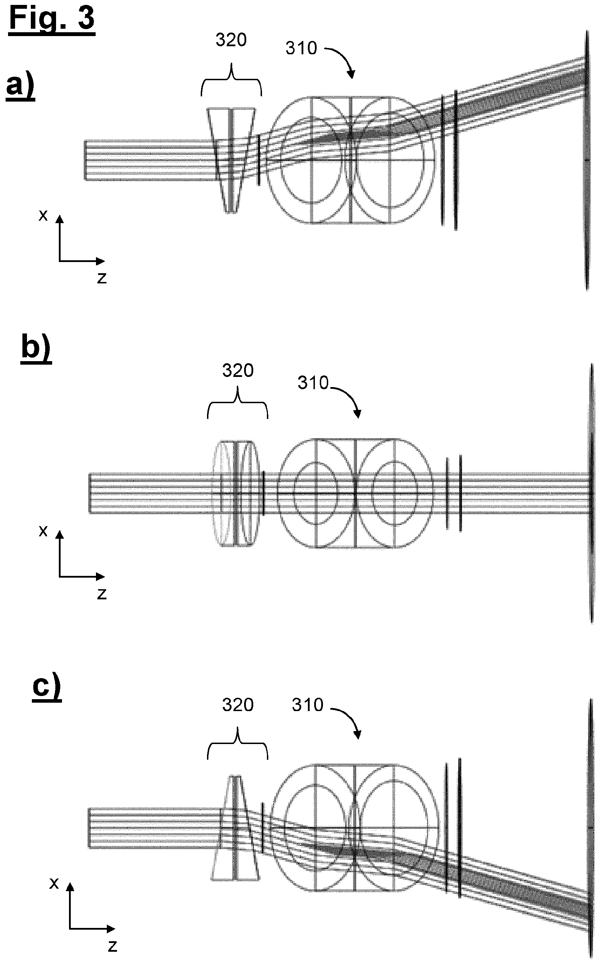

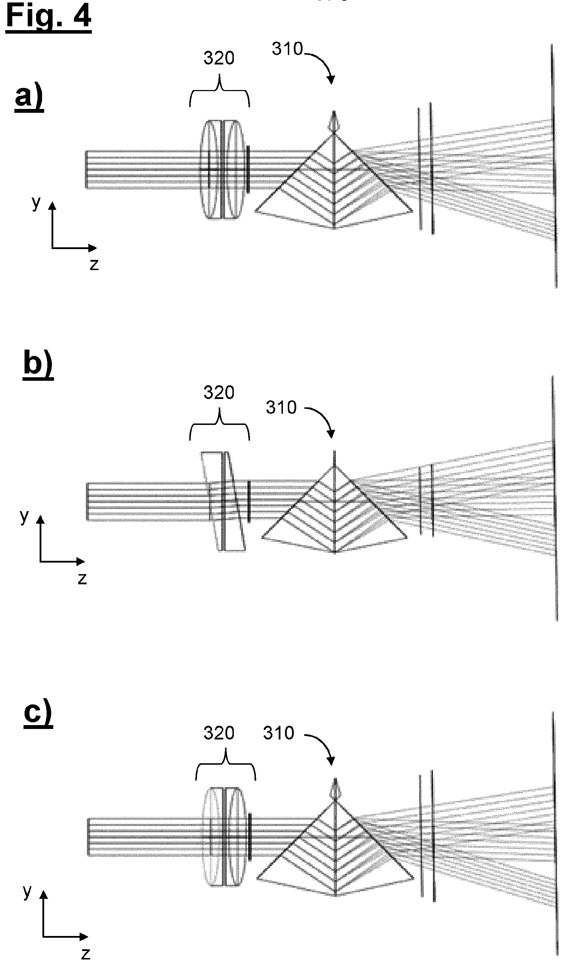

Die Erfindung ist jedoch nicht auf die vorstehend beschriebene Reihenfolge beschränkt. Hierzu zeigen Fig. 3a-3c und Fig. 4a-4c analoge Darstellungen einer weiteren möglichen Ausführungsform mit entsprechend vertauschter Reihenfolge, so dass auf die Anordnung auftreffendes, von der durchstimmbaren Lichtquelle erzeugtes Licht hier zunächst auf die zweite optische Komponente 320 (d.h. das Prismen-Paar) und erst dann auf die erste optische Komponente 310 (bzw. das Gitterprisma) trifft.

Die Darstellungen von Fig. 3a-3c zeigen die Anordnung jeweils in Draufsicht (d.h. in der x-z-Ebene im eingezeichneten Koordinatensystem) und für unterschiedliche Drehwinkel der gegenläufig rotierenden Prismen der Komponente 320, wobei die Stellung gemäß Fig. 3a einem Drehwinkel von 0°, die Stellung gemäß Fig. 3b einem Drehwinkel von 90° und die Stellung gemäß Fig. 3c einem Drehwinkel von 180° entspricht.

Die Prismen der Komponente 320 können (ohne dass die Erfindung hierauf beschränkt wäre) z.B. aus Bor-Kronglas (wie z.B. dem unter der Bezeichnung BK7® kommerziell erhältlichen Glasmaterial der Firma Schott) gefertigt sein. Der Keilwinkel des die Komponente 320 bildenden Prismenpaars beträgt im Ausführungsbeispiel 10°, wobei der resultierende Ablenkwinkel zwischen -17° und +17° variiert. Des Weiteren ist im Ausführungsbeispiel (jedoch ohne dass die Erfindung hierauf beschränkt wäre) die erste optische Komponente 310 bzw. das Gitterprisma aus Silizium (Si) gefertigt, wobei die Gitterperiode 413.2 nm (entsprechend einer Liniendichte von 2420 Linien/mm) beträgt.

Fig. 4a-4c zeigen analoge Darstellungen für die Seitenansicht (d.h. in der y-z-Ebene im eingezeichneten Koordinatensystem), wobei wiederum die Stellung gemäß Fig. 4a einem Drehwinkel von 0°, die Stellung gemäß Fig. 4b einem Drehwinkel von 90° und die Stellung gemäß Fig. 4c einem Drehwinkel von 180° entspricht.

Die in den vorstehend beschriebenen Ausführungsformen von Fig. 1 bis Fig. 4 gewählte Realisierung der ersten optischen Komponente 110 bzw. 310 als (hochgradig dispersives) Gitterprisma ist insofern besonders vorteilhaft, als der für den zweidimensionalen Scanvorgang benötigte Durchstimmbereich der wenigstens einen Lichtquelle vergleichsweise gering sein kann. Hierdurch wird zum einen dem Umstand Rechnung getragen, dass der insoweit nutzbare Wellenlängenbereich in der Umgebung einer typischen Arbeitswellenlänge von 1500nm im Hinblick auf die zu gewährleistenden Transmissionseigenschaften vergleichsweise klein, ein bereits bei geringfügiger Wellenlängenänderung signifikante Variation des Ablenkwinkels also wünschenswert ist. Im o.g. Ausführungsbeispiel ergibt sich infolge der Dispersion der ersten optischen Komponente 310 bzw. des Gitterprismas für eine Wellenlängenänderung um 1nm bei einer Wellenlänge 1530 nm eine Änderung des Ablenkwinkels um ca. 0.30°, für eine Wellenlängenänderung um 1nm bei einer Wellenlänge von 1580 nm eine Änderung des Ablenkwinkels um ca. 0.24° und für eine Wellenlängenänderung um 1nm bei einer Wellenlänge von 1625 nm eine Änderung des Ablenkwinkels um ca. 0.21°.

Zum anderen kann bei entsprechender Minimierung des Durchstimmbereichs der Lichtquelle infolge Verwendung eines hochgradig dispersiven Gitterprismas der gegebenenfalls unerwünschte Effekt einer Wellenlängenabhängigkeit der Strahlablenkung auf Seiten der zweiten Komponente 120 bzw. 320 bzw. des Prismen-Paars, die prinzipiell zu einem trapezförmigen Bildfeld führen würde, gering gehalten werden. Dabei wird hier unter einem "hochgradig dispersiven Gitterprisma" ein Gitterprisma verstanden, bei welchem die Änderung des Ablenkwinkels bei Verstimmung der Wellenlänge um 1nm wenigstens 0.1°, insbesondere wenigstens 0.2°, weiter insbesondere wenigstens 0.3°, beträgt.

In weiteren Ausführungsformen kann anstelle eines einzigen Gitters zur Erhöhung der Winkelablenkung bzw. Vergrößerung des realisierbaren Winkelbereichs der Winkelablenkung eine Anordnung von mehreren Gittern auf Seiten der ersten (d.h. der "wellenlängenabhängig arbeitenden") optischen Komponente verwendet werden.

Die erfindungsgemäße zweidimensional scannende Strahlablenkung kann in einer beispielhaften vorteilhaften Anwendung in einem LIDAR-System ausgehend von dem anhand von Fig. 5a-5b beschriebenen herkömmlichen Aufbau (unter entsprechender Ausgestaltung der Scan-Einrichtung 55 mit der erfindungsgemäßen Anordnung aus erster optischer Komponente und zweiter optischer Komponente) eingesetzt werden.

Die Erfindung ist jedoch nicht auf diese Anwendung beschränkt, sondern ganz allgemein in Anwendungen vorteilhaft realisierbar, in welchen eine schnelle zweidimensionale Strahlablenkung gewünscht ist.

Wenn die Erfindung auch anhand spezieller Ausführungsformen beschrieben wurde, erschließen sich für den Fachmann zahlreiche Variationen und alternative Ausführungsformen, z.B. durch Kombination und/oder Austausch von Merkmalen einzelner Ausführungsformen. Dementsprechend versteht es sich für den Fachmann, dass derartige Variationen und alternative Ausführungsformen von der vorliegenden Erfindung mit umfasst sind und die Reichweite der Erfindung nur im Sinne der beigefügten Patentansprüche und deren Äquivalente beschränkt ist.

## Patentansprüche

1. Vorrichtung zur zweidimensional scannenden Strahlablenkung eines Lichtstrahls, mit
• wenigstens einer spektral durchstimmbaren Lichtquelle zum Aussenden wenigstens eines Lichtstrahls mit zeitlich variierender Wellenlänge;
• einer ersten optischen Komponente (110, 310) zur Erzeugung einer ersten Strahlablenkung, über welche aus dem Lichtstrahl hervorgegangene Teilstrahlen wellenlängenabhängig jeweils in einer ersten Richtung ablenkbar sind; und
• einer zweiten optischen Komponente (120, 320) zur Erzeugung einer zweiten Strahlablenkung, über welche die von der ersten optischen Komponente (110, 310) abgelenkten Teilstrahlen vor oder nach dieser Ablenkung jeweils in einer von der ersten Richtung verschiedenen zweiten Richtung abgelenkt werden;
• wobei die zweite optische Komponente (120, 320) wenigstens ein Prismen-Paar aus im Strahlengang hintereinander drehbar angeordneten Prismen aufweist.

2. Vorrichtung nach Anspruch 1, **dadurch gekennzeichnet, dass** die erste optische Komponente (110, 310) wenigstens ein Gitter aufweist.

3. Vorrichtung nach Anspruch 1 oder 2, **dadurch gekennzeichnet, dass** die erste optische Komponente (110, 310) wenigstens ein Gitterprisma aufweist.

4. Vorrichtung nach einem der Ansprüche 1 bis 3, **dadurch gekennzeichnet, dass** die Prismen der Prismen-Paars als achromatische Prismen ausgestaltet sind.

5. Vorrichtung nach einem der vorhergehenden Ansprüche, **dadurch gekennzeichnet, dass** die zweite Richtung senkrecht zur ersten Richtung ist.

6. Vorrichtung nach einem der vorhergehenden Ansprüche, **dadurch gekennzeichnet, dass** die zweite optische Komponente (120) bezogen auf die Lichtausbreitungsrichtung nach der ersten optische Komponente (110) angeordnet ist.

7. Vorrichtung nach einem der vorhergehenden Ansprüche, **dadurch gekennzeichnet, dass** die wenigstens eine spektral durchstimmbare Lichtquelle zum parallelen Aussenden einer Mehrzahl von Lichtstrahlen mit jeweils zeitlich variierender Wellenlänge ausgelegt ist.

8. Vorrichtung nach einem der vorhergehenden Ansprüche, **dadurch gekennzeichnet, dass** diese ferner wenigstens einen Polarisator aufweist.

9. Verwendung einer Vorrichtung nach einem der vorhergehenden Ansprüche in einem LIDAR-System zur scannenden Abstandsermittlung eines Objekts.

10. LIDAR-System zur scannenden Abstandsermittlung eines Objekts, mit
• wenigstens einer spektral durchstimmbaren Lichtquelle (50) zum Aussenden wenigstens eines Lichtstrahls (51) mit zeitlich variierender Wellenlänge;
• einer Auswerteeinrichtung zur Ermittlung eines Abstandes des Objekts (56) auf Basis von aus dem Lichtstrahl jeweils hervorgegangenen, an dem Objekt (56) reflektierten Messsignalen (52) und nicht an dem Objekt (56) reflektierten Referenzsignalen (53); und
• einer Scan-Einrichtung (55), welche eine wellenlängenabhängige Winkelverteilung der zu dem Objekt (56) gelenkten Messsignale (52) bewirkt, wobei diese Scan-Einrichtung (55) aufweist:
- eine erste optische Komponente (110, 310) zur Erzeugung einer ersten Strahlablenkung, über welche aus dem Lichtstrahl hervorgegangene Teilstrahlen wellenlängenabhängig jeweils in einer ersten Richtung ablenkbar sind; und
- eine zweite optische Komponente (120, 320) zur Erzeugung einer zweiten Strahlablenkung, über welche die von der ersten optischen Komponente (110, 310) abgelenkten Teilstrahlen vor oder nach dieser Ablenkung jeweils in einer von der ersten Richtung verschiedenen zweiten Richtung abgelenkt werden;
- wobei die zweite optische Komponente (120, 320) wenigstens ein Prismen-Paar aus im Strahlengang hintereinander drehbar angeordneten Prismen aufweist.
